# FASCICULE DE BREVET EUROPEEN

(11) **EP 2 173 982 B1**
(45) Date de publication et mention de la délivrance du brevet: **19.12.2012**
(21) Numéro de dépôt: 08827780.1
(22) Date de dépôt: 25.07.2008
(51) Int. Cl.: F01N 3/025, F01N 3/035, F01N 11/00, F01N 3/36

(54) **SYSTEME ET PROCEDE DE REGENERATION D'UN FILTRE A PARTICULES CATALYTIQUE SITUE DANS LA LIGNE D'ECHAPPEMENT D'UN MOTEUR DIESEL**
SYSTEM UND VERFAHREN ZUR REGENERATION EINES KATALYSATORPARTIKELFILTERS IN EINER DIESELMOTOR-ABGASLEITUNG
SYSTEM AND METHOD FOR REGENERATING A CATALYTIC PARTICLE FILTER LOCATED IN THE EXHAUST LINE OF A DIESEL ENGINE

(30) Priorité: 10.08.2007 FR 0757020
(43) Date de publication de la demande: 14.04.2010
(73) Titulaire: Renault S.A.S., 92100 Boulogne-Billancourt (FR)
(72) Inventeur: THENEGAL, Cécile, F-78100 Saint Germain En Laye (FR); PLOTON, Violaine, F-91690 Fontaine La Riviere (FR)
(86) Numéro de dépôt international: PCT/FR2008/051410
(87) Numéro de publication internationale: WO 2009/024704

(56) Documents cités:
- FR-A- 2 880 065
- FR-A- 2 891 304
- US-A1- 2005 103 099
- US-B1- 6 487 852

## Description

La présente invention concerne un système et un procédé de régénération d'un filtre à particules catalytique situé dans la ligne d'échappement d'un moteur diesel.

Comme on le sait, l'hétérogénéité des processus de combustion dans les moteurs, en particulier dans les moteurs Diesel, a pour effet de générer des particules de carbone, qui ne peuvent être brûlées efficacement dans le moteur. Cela se traduit par l'apparition, en sortie de la ligne d'échappement, de fumées noires, caractéristiques des moteurs Diesel. Ce phénomène apparaît en particulier lors des phases de démarrage et lors de fortes accélérations.

C'est la raison pour laquelle les lignes d'échappement de tels véhicules sont pourvues d'un filtre à particules qui permet de diminuer considérablement la quantité de particules, poussières et autres suies, émises dans l'atmosphère, et de satisfaire aux normes anti-pollution. Cependant, au fur et à mesure de l'utilisation du moteur, les particules s'accumulent dans le filtre et finissent par entraîner une contre-pression importante à l'échappement du moteur, ce qui diminue considérablement ses performances.

A cet égard, des dispositifs de régénération pilotés permettent de brûler périodiquement les particules piégées dans le filtre et d'éviter ainsi une élévation importante de la contre-pression à l'échappement et un éventuel colmatage du filtre.

Cette régénération est classiquement effectuée en élevant la température au sein du filtre à particules jusqu'à une température de l'ordre de 550 à 650°C, température à partir de laquelle les particules de carbone retenues dans le filtre se consument spontanément.

Pour ce faire, on peut procéder à une injection retardée du carburant, ou post-injection, dans les chambres de combustion du moteur. On peut en particulier injecter du carburant après le point mort haut lors de la phase de détente, ce qui a pour effet d'augmenter la température des gaz d'échappement.

Toutefois, une telle injection retardée présente l'inconvénient d'élever la température des gaz d'échappement très en amont du filtre à particules, ce qui est susceptible d'engendrer une fatigue mécanique et de provoquer un phénomène de dilution du gasoil dans l'huile de lubrification du moteur. Il en découle ainsi une dégradation de ses propriétés physiques ou chimiques pouvant aboutir à une usure prématurée du moteur.

Des dispositifs de diagnostic de l'état de fonctionnement du système de filtration provoquent généralement le déclenchement de la régénération lorsque la quantité de suies stockées dans le filtre à particules est telle que la régénération peut être effectuée dans des conditions parfaitement contrôlables.

Il est néanmoins nécessaire que la régénération s'effectue dans des conditions de roulage prédéterminées, par exemple lorsque le véhicule circule à vitesse soutenue pendant une durée relativement longue. Il est donc souhaitable de déterminer les conditions de roulage d'un trajet futur, afin d'éviter de lancer une régénération dans des conditions qui peuvent avoir des conséquences néfastes pour le système de filtration ou aboutir à une régénération incomplète. Tel est en particulier le cas lorsque le véhicule circule dans un environnement urbain.

Afin de réduire la quantité de polluants émis dans l'atmosphère, on peut également prévoir un dispositif de traitement des gaz d'échappement monté sur la ligne d'échappement. Un tel dispositif de traitement peut être pourvu d'un catalyseur d'oxydation et d'un injecteur de carburant disposé en amont du catalyseur d'oxydation, en considérant le sens de circulation des gaz d'échappement.

Ainsi, la demande de brevet français FR 2 891 304 (RENAULT) divulgue un système de régénération de filtre à particules catalytique par injection de carburant à l'échappement, dans lequel on détecte un blocage en position ouverte de l'injecteur disposé dans la ligne d'échappement du moteur à partir de la pression d'alimentation en carburant de l'injecteur mesurée par un capteur. Le coût de ce capteur de pression est cependant assez élevé.

On connait également les documents FR 2880065 et US 2005/103099 qui décrivent un dispositif de régénération d'un filtre à particules catalytique comprenant un catalyseur d'oxydation et un filtre à particules montés en série dans la ligne d'échappement d'un moteur. Le dispositif comporte en outre une unité de commande électronique, un injecteur de carburant commandé disposé en amont du filtre à particules catalytique et alimenté en carburant par une pompe.

Le document FR 2880065 divulgue en plus, un second catalyseur d'oxydation monté en série entre le premier catalyseur d'oxydation et le filtre à particules. Le document FR 2880065 ne divulgue pas de moyens de détection du blocage en position ouverte de l'injecteur par mesure des températures en amont et en aval du catalyseur d'oxydation.

Le document US 2005/103099 divulgue un dispositif et un procédé dans lequel la différence de température en amont et en aval du deuxième catalyseur d'oxydation permet de déterminer, via un modèle, si l'injecteur de carburant fuit ou est bloqué. La détermination du blocage de l'injecteur étant réalisée par comparaison d'exothermes.

Le document US 2005/103099 ne divulgue donc pas de moyen de détermination du débit de carburant injecté équivalent en fonction des températures en amont et en aval du catalyseur d'oxydation. Le débit de carburant équivalent est alors comparé à la consigne de débit de carburant afin de déterminer si l'injecteur de carburant fuit ou est bloqué.

Il existe donc un besoin pour un système ou un procédé permettant de déterminer un blocage en position ouverte de l'injecteur en fonction d'un débit de carburant équivalent correspondant à la différence de température entre la température en amont et en aval du catalyseur d'oxydation.

Un but de l'invention est de réduire le coût de surveillance du bon fonctionnement de l'injecteur disposé dans la ligne d'échappement du véhicule.

Selon un aspect de l'invention, il est proposé un système de régénération d'un filtre à particules catalytique comprenant un catalyseur d'oxydation et un filtre à particules, monté dans la ligne d'échappement d'un moteur diesel de véhicule automobile. Le système comprend une unité de commande électronique, un injecteur de carburant commandé disposé en amont du filtre à particules catalytique et alimenté en carburant par une pompe commandée, des moyens de détermination de la température des gaz d'échappement du moteur en amont du catalyseur d'oxydation, et des moyens de détermination de la température des gaz d'échappement du moteur en aval du catalyseur d'oxydation. Le système comprend, en outre, des moyens de détection d'un blocage en position ouverte dudit injecteur à partir desdites températures en amont et en aval du catalyseur d'oxydation.

Le système permet, à coût réduit, de détecter un blocage en position ouverte de l'injecteur de carburant commandé disposé en amont du filtre à particules catalytique.

Les moyens de détermination des températures en amont et en aval du catalyseur d'oxydation comprennent des capteurs de températures et/ou des estimateurs. En outre, ces moyens de détermination des températures en amont et en aval du catalyseur d'oxydation sont généralement déjà présents pour d'autres dispositifs embarqués à bord du véhicule.

En d'autres termes, les moyens de détection détectent un défaut de fonctionnement de l'injecteur lorsqu'il doit se fermer, et qu'il reste bloqué en position ouverte. Il est alors possible de détecter une défaillance de fonctionnement d'un tel système de régénération d'un filtre à particules catalytique.

L'invention permet de limiter les risques d'injection excessive de carburant dans un milieu à haute température, pouvant entraîner une explosion et une dégradation du système.

Le débit estimé de carburant injecté par l'injecteur sert à détecter un blocage en position ouverte de l'injecteur.

Dans un mode de réalisation, les moyens d'estimation sont adaptés pour effectuer l'estimation du débit de carburant injecté par l'injecteur par inversion de modélisation d'une estimation de la «, lesdits moyens de détection comprennent des moyens d'estimation du débit de carburant injecté par ledit injecteur à partir desdites températures en amont et en aval du catalyseur d'oxydation et des moyens de comparaison pour comparer ledit débit estimé de carburant injecté avec un débit de seuil, lesdits moyens de détection étant en outre adaptés pour détecter un blocage en position ouverte de l'injecteur lorsque ledit débit estimé de carburant injecté est supérieur au débit de seuil.» différence entre les températures en amont et en aval du catalyseur d'oxydation à partir du débit de carburant injecté par ledit injecteur.

L'inversion de modélisation, permet d'obtenir directement le débit de carburant injecté par l'injecteur, à partir des températures en amont et en aval du catalyseur d'oxydation.

Avantageusement, le système comprend, en outre, des moyens de désactivation pour désactiver les moyens de détection lorsqu'un défaut de fonctionnement électrique d'au moins un desdits moyens de détermination des températures des gaz d'échappement du moteur en amont et en aval du catalyseur d'oxydation est détecté, lorsqu'un défaut de fonctionnement électrique de l'injecteur est détecté, lorsqu'un défaut de fonctionnement électrique de la pompe alimentant en carburant l'injecteur est détectée, ou lorsque ladite pompe est désactivée.

Avantageusement, les moyens de détection sont adaptés pour mettre un terme à la régénération du filtre à particules catalytique lorsque les moyens de détection détectent un blocage en position ouverte dudit injecteur.

Ainsi, les risques d'accident par injection de carburant à des températures trop élevées sont réduits.

Selon un autre aspect de l'invention, il est également proposé un procédé de régénération d'un filtre à particules catalytique, comprenant un catalyseur d'oxydation et un filtre à particule, monté dans la ligne d'échappement d'un moteur diesel de véhicule automobile. On détecte un blocage en position ouverte d'un injecteur de carburant commandé disposé en amont du filtre à particules catalytique, à partir des températures en amont et en aval du catalyseur d'oxydation et dans lequel on estime un débit de carburant injecté à partir desdites températures en amont et en aval du catalyseur d'oxydation, on détecte un blocage en position ouverte de l'injecteur lorsqu'un débit estimé de carburant injecté est supérieur à un débit de seuil.

Dans un mode de mise en oeuvre, on met un terme à la régénération du filtre à particules catalytique lorsqu'on détecte un blocage en position ouverte de l'injecteur.

D'autres buts, caractéristiques et avantages de l'invention apparaîtront à la lecture de la description suivante, de quelques exemples nullement limitatifs, et faite en référence aux dessins annexés, sur lequel :
- la figure 1 est un schéma synoptique d'un mode de réalisation d'un système selon un aspect de l'invention ;
- la figure 2 illustre l'inversion de modélisation utilisée par les moyens d'estimation du débit de carburant injecté.

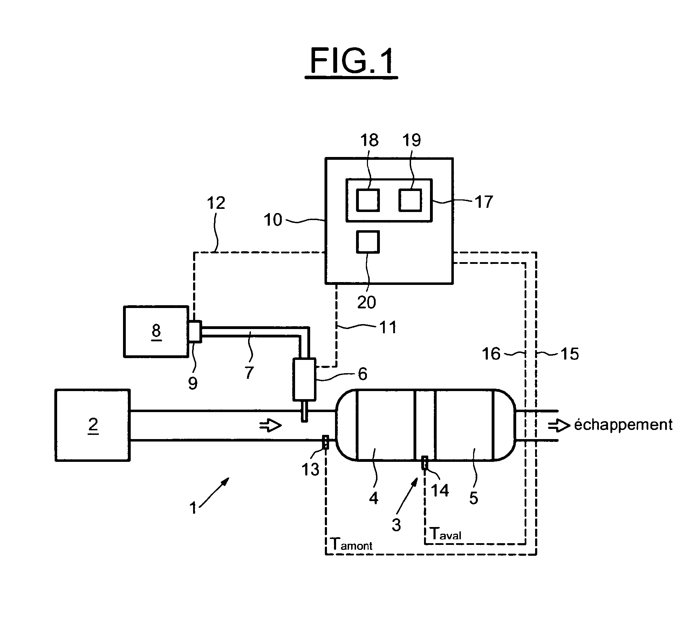

Sur la figure 1, la ligne d'échappement 1 d'un véhicule automobile équipé d'un moteur diesel 2.

La ligne d'échappement 1 comprend un filtre à particules catalytique 3, comprenant un catalyseur d'oxydation 4 des hydrocarbures et du monoxyde de carbone et un filtre à particules 5.

Un injecteur 6 pulvérise du carburant en amont du catalyseur d'oxydation 4. Le catalyseur d'oxydation 4 est sollicité périodiquement pendant les phases de régénération du filtre à particules 5 pour créer de la chaleur permettant la régénération du filtre à particules 5. L'injection de carburant par l'injecteur 6 permet de réchauffer les gaz d'échappement. L'injecteur 6 est alimenté en carburant par l'intermédiaire d'un conduit 7 reliant l'injecteur 6 à un réservoir de carburant 8. Une pompe à carburant 9 permet de fournir du carburant sous pression à l'injecteur 6 par le conduit 7.

L'injecteur 6, et la pompe 9 sont respectivement connectés à une unité de commande électronique 10 par des connexions 11 et 12. Des capteurs de température 13 et 14, respectivement disposés en amont et en aval du catalyseur d'oxydation, délivrent des mesures de températures, respectivement Tₐₘₒₙₜ et T_{aval,} à l'unité de commande électronique 10 par des connexions 15 et 16. En variante, le capteur de température 13, le capteur de température 14, ou les deux capteurs de température 13 et 14 peuvent être remplacés par des estimateurs.

L'unité de commande électronique 10 comprend un module de détection 17 d'un blocage en position ouverte de l'injecteur 6, à partir des températures en amont Tₐₘₒₙₜ et en aval Tₐᵥₐₗ du catalyseur d'oxydation 4. Le module de détection 17 comprend un module d'estimation 18 du débit de carburant injecté par l'injecteur 6 à partir desdites températures en amont Tₐₘₒₙₜ et en aval Tₐᵥₐₗ du catalyseur d'oxydation 4.

Le module d'estimation 18 du débit de carburant injecté par l'injecteur 6 peut utiliser une inversion d'une modélisation d'un catalyseur d'oxydation. En effet, généralement, les modélisations de catalyseur d'oxydation fournissent en sortie la différence entre la température en aval et la température en amont du catalyseur. Le module d'estimation 18 utilise une inversion d'une telle modélisation, afin de fournir, à partir de la différence entre la température en aval Tₐᵥₐₗ et la température en amont Tₐₘₒₙₜ du catalyseur, le débit estimé de carburant injecté par l'injecteur 6. Le module d'estimation 18 effectue l'estimation en deux étapes. Lors d'une première étape, il estime la quantité de monoxyde de carbone équivalente à cette différence de températures, ou, en d'autres termes, la quantité de monoxyde de carbone devant réagir dans le catalyseur pour provoquer cette différence de températures, pour, par la suite, en déduire un débit de carburant. Lors d'une deuxième phase le module d'estimation 18 soustrait le débit correspondant aux injections de carburant dans le moteur 2, pour obtenir le débit de carburant injecté dans la ligne d'échappement 1 par l'injecteur 6.

Le module de détection 17 comprend également un module de comparaison 19 pour comparer le débit de carburant injecté estimé par le module d'estimation 18 avec un débit de seuil mémorisé.

Le module de détection 17 détecte un blocage en position ouverte de l'injecteur 6 lorsque le débit estimé de carburant, injecté en amont du catalyseur d'oxydation 4 dans la ligne d'échappement 1 du moteur 2, est supérieur au débit de seuil. En effet un tel débit de carburant injecté indique la présence d'un blocage en position d'ouverture de l'injecteur 6.

En outre, le système comprend un module de désactivation 20 pour désactiver le module de détection 17 lorsqu'un défaut de fonctionnement électrique d'au moins un desdits moyens de détermination 13, 14 des températures Tₐₘₒₙₜ et Tₐᵥₐₗ des gaz d'échappement du moteur 2 en amont et en aval du catalyseur d'oxydation 4 est détecté, lorsqu'un défaut de fonctionnement électrique de l'injecteur 6 est détecté, lorsqu'un défaut de fonctionnement électrique de la pompe 9 est détecté, ou lorsque la pompe 9 est désactivée.

En effet, lorsque de tels événements sont détectés, le diagnostic de fonctionnement de l'injecteur 6 manque de fiabilité.

En outre, les moyens de détection 17 mettent un terme à toute phase de régénération du filtre à particules catalytique 3 lorsqu'ils détectent un blocage en position ouverte de l'injecteur 6. On évite ainsi de pulvériser du carburant dans un milieu de température particulièrement élevée.

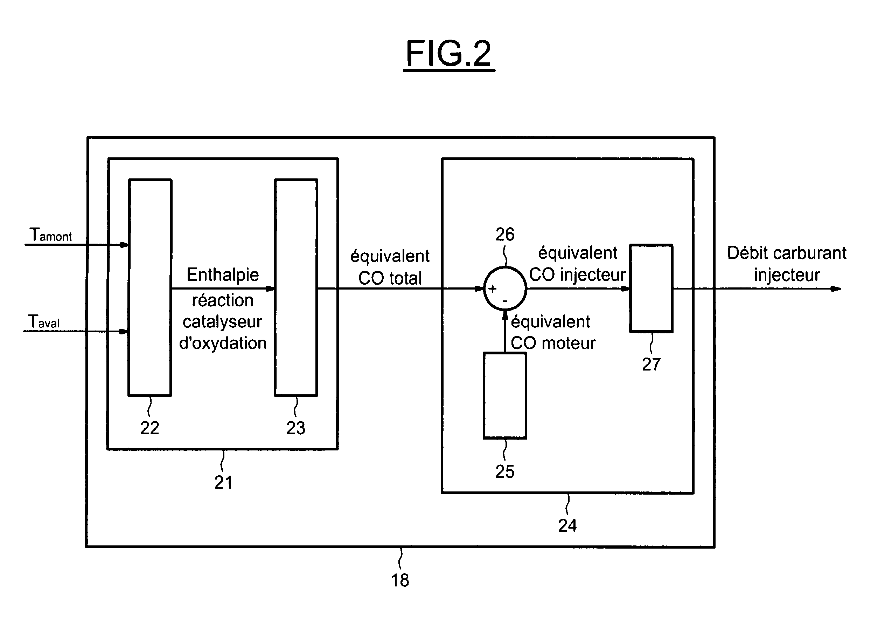

La figure 2 illustre un exemple de réalisation des moyens d'estimation 18 du débit de carburant injecté par l'injecteur 6, par inversion de modélisation.

Le module d'estimation 18 comprend un premier module de calcul 21 de la quantité de monoxyde de carbone équivalente à la différence entre les températures en amont Tₐₘₒₙₜ et en aval Tₐᵥₐₗ du catalyseur d'oxydation 4, ou, en d'autres termes, la quantité de monoxyde de carbone devant réagir dans le catalyseur pour provoquer cette différence de températures. Le premier module de calcul 21 comprend un premier sous-module 22 de calcul de l'enthalpie de la réaction du catalyseur d'oxydation 4, et un deuxième sous-module de calcul 23 de la quantité de monoxyde de carbone équivalente à la différence entre les températures en amont Tₐₘₒₙₜ et en aval Tₐᵥₐₗ du catalyseur d'oxydation 4, à partir de l'enthalpie de la réaction du catalyseur d'oxydation 4 calculée par le premier sous-module de calcul 22. Le premier sous-module de calcul 22 de l'enthalpie de la réaction du catalyseur d'oxydation 4 utilise, par exemple, des cartographies du pouvoir calorifique des gaz d'échappement et du catalyseur.

Le module d'estimation 18 comprend, en outre, un deuxième module de calcul 24 du débit injecté par l'injecteur 6, à partir de la quantité de monoxyde de carbone délivrée en sortie du premier module de calcul 21. Le deuxième module de calcul 22 comprend un premier sous-module de calcul 25 de la quantité de monoxyde de carbone correspondant aux injections normales et retardées de carburant dans les cylindres du moteur 2.

Un soustracteur 26 soustrait à la quantité équivalente de monoxyde de carbone correspondant à l'écart entre les températures en amont Tₐₘₒₙₜ et en aval Tₐᵥₐₗ du catalyseur d'oxydation 4 délivrée par le premier module de calcul 21, la quantité de monoxyde de carbone délivrée par le sous-module de calcul 25 correspondant aux injections normales et retardées de carburant dans les cylindres du moteur 2.

A partir de la quantité de monoxyde de carbone fourni par le soustracteur 26, une cartographie 27, pouvant avoir comme autre paramètre d'entrée la vitesse de rotation du moteur 2, fournit en sortie le débit estimé de carburant injecté par l'injecteur 6 monté dans la ligne d'échappement 1 du moteur 2.

La présente invention permet de détecter un blocage en position d'ouverture d'un injecteur disposé en amont d'un filtre à particules catalytique, et ainsi d'améliorer le contrôle du fonctionnement des phases de régénération du filtre, à coût réduit.

En outre, la présente invention permet, suite à la détection d'un blocage de l'injecteur en position d'ouverture, de mettre en oeuvre un fonctionnement dégradé du système, par exemple en interdisant une régénération du filtre à particules tout en alertant le conducteur.

## Revendications

1. Système de régénération d'un filtre à particules catalytique (3) comprenant un catalyseur d'oxydation (4) et un filtre à particules (5), monté dans la ligne d'échappement (1) d'un moteur diesel (2) de véhicule automobile, ledit système comprenant une unité de commande électronique (11), un injecteur de carburant commandé (6) disposé en amont du filtre à particules catalytique (3) et alimenté en carburant par une pompe commandée (9), des moyens de détermination (13) de la température (Tₐₘₒₙₜ) des gaz d'échappement du moteur (2) en amont du catalyseur d'oxydation (4), et des moyens de détermination (14) de la température (Tₐᵥₐₗ) des gaz d'échappement du moteur (2) en aval du catalyseur d'oxydation (4), **caractérisé par le fait qu'**il comprend des moyens de détection (17) d'un blocage en position ouverte dudit injecteur (6) à partir desdites températures (Tₐₘₒₙₜ, Tₐᵥₐₗ) en amont et en aval du catalyseur d'oxydation (4),
lesdits moyens de détection (17) comprennent des moyens d'estimation (18) du débit de carburant injecté par ledit injecteur (6) à partir desdites températures Tₐᵥₐₗ) en amont et en aval du catalyseur d'oxydation (4) et des moyens de comparaison (19) pour comparer ledit débit estimé de carburant injecté avec un débit de seuil,
lesdits moyens de détection (17) étant en outre adaptés pour détecter un blocage en positon ouverte de l'injecteur (6) lorsque ledit débit estimé de carburant injecté est supérieur au débit de seuil.

2. Système selon la revendication 1, dans lequel les moyens d'estimation (18) sont adaptés pour effectuer l'estimation du débit de carburant injecté par l'injecteur (6) par inversion de modélisation d'une estimation de la différence entre les températures (Tₐₘₒₙₜ, Tₐᵥₐₗ) en amont et en aval du catalyseur d'oxydation (4) à partir du débit de carburant injecté par ledit injecteur (6).

3. Système selon l'une quelconque des revendications précédentes, comprenant, en outre, des moyens de désactivation (20) pour désactiver les moyens de détection (17) lorsqu'un défaut de fonctionnement électrique d'au moins un desdits moyens de détermination (13, 14) des températures (Tₐₘₒₙₜ, Tₐᵥₐₗ) des gaz d'échappement du moteur (2) en amont et en aval du catalyseur d'oxydation (4) est détecté, lorsqu'un défaut de fonctionnement électrique de l'injecteur (6) est détecté, lorsqu'un défaut de fonctionnement électrique de la pompe (9) alimentant en carburant l'injecteur (6) est détecté, ou lorsque ladite pompe (9) est désactivée.

4. Système selon l'une quelconque des revendications précédentes, dans lequel lesdits moyens de détection (15) sont adaptés pour mettre un terme à la régénération du filtre à particules catalytique (3) lorsque les moyens de détection (15) détectent un blocage en position ouverte de l'injecteur (6).

5. Procédé de régénération d'un filtre à particules catalytique (3), comprenant un catalyseur d'oxydation (4) et un filtre à particule (5), monté dans la ligne d'échappement (1) d'un moteur diesel (2) de véhicule automobile, **caractérisé par le fait qu'**on détecte un blocage en position ouverte d'un injecteur de carburant commandé (6) disposé en amont du filtre à particules catalytique (3), à partir des températures (Tₐₘₒₙₜ, Tₐᵥₐₗ) en amont et en aval du catalyseur d'oxydation (4) et dans lequel on estime un débit de carburant injecté à partir desdites températures (Tamont, Taval) en amont et en aval du catalyseur d'oxydation (4),
on détecte un blocage en position ouverte de l'injecteur (6) lorsqu'un débit estimé de carburant injecté est supérieur à un débit de seuil.

6. Procédé selon la revendication 5, dans lequel on met un terme à la régénération du filtre à particules catalytique (3) lorsqu'on détecte un blocage en position ouverte de l'injecteur (6).

## Claims

1. System for regenerating a catalytic particulate filter (3) comprising an oxidation catalytic converter (4) and a particulate filter (5), which is mounted in the exhaust line (1) of a motor vehicle diesel engine (2), the said system comprising an electronic control unit (11), a controlled fuel injector (6) positioned upstream of the catalytic particulate filter (3) and supplied with fuel by a controlled pump (9), means (13) of determining the temperature (Tᵤₚₛₜᵣₑₐₘ) of the exhaust gases of the engine (2) upstream of the oxidation catalytic converter (14), and means (14) of determining the temperature (T_{downstream}) of the exhaust gases of the engine (2) downstream of the oxidation catalytic converter (4), **characterized in that** it comprises means (17) of detecting that the said injector (6) is jammed in the open position from the said temperatures (Tᵤₚₛₜᵣₑₐₘ, T_{downstream}) upstream and downstream of the oxidation catalytic converter (4),
the said detection means (17) comprise means (18) of estimating the delivery of fuel injected by the said injector (6) from the said temperatures (Tᵤₚₛₜᵣₑₐₘ, T_{downstream}) upstream and downstream of the oxidation catalytic converter (4) and comparison means (19) for comparing the said estimated injected fuel delivery against a threshold delivery,
the said detection means (17) also being designed to detect that the injector (6) is jammed in the open position when the said estimated injected fuel delivery is higher than the threshold delivery.

2. System according to Claim 1, in which the estimating means (18) are designed to estimate the delivery of fuel injected by the injector (6) by inverting the modelling of an estimate of the difference between the temperatures (Tᵤₚₛₜᵣₑₐₘ, T_{downstream}) upstream and downstream of the oxidation catalytic converter (4) on the basis of the delivery of fuel injected by the said injector (6).

3. System according to either one of the preceding claims, further comprising deactivation means (20) for deactivating the detection means (17) when defective electrical operation of at least one of the said means (13, 14) of determining the temperatures (Tᵤₚₛₜᵣₑₐₘ, T_{downstream}) of the exhaust gases of the engine (2) upstream and downstream of the oxidation catalytic converter (4) is detected, when defective electrical operation of the injector (6) is detected, when defective electrical operation of the pump (9) supplying the injector (6) with fuel is detected, or when the said pump (9) is deactivated.

4. System according to any one of the preceding claims, in which the said detection means (15) are designed to terminate the regeneration of the catalytic particulate filter (3) when the detection means (15) detect that the injector (6) is jammed in the open position.

5. Method for regenerating a catalytic particulate filter (3), comprising an oxidation catalytic converter (4) and a particulate filter (5), which is mounted in the exhaust line (1) of a motor vehicle diesel engine (2), **characterized in that** a controlled fuel injector (6) positioned upstream of the catalytic particulate filter (3) is detected to be jammed in the open position from temperatures (Tᵤₚₛₜᵣₑₐₘ, T_{downstream}) upstream and downstream of the oxidation catalytic converter (4), and in which an injected fuel delivery is estimated from the said temperatures (Tᵤₚₛₜᵣₑₐₘ, T_{downstream}) upstream and downstream of the oxidation catalytic converter (4),
the injector (6) is detected as being jammed in the open position when an estimated injected fuel delivery is higher than a threshold delivery.

6. Method according to Claim 5, in which the regeneration of the catalytic particulate filter (3) is terminated when it is detected that the injector (6) is jammed in the open position.

## Patentansprüche

1. System zur Regeneration eines katalytischen Partikelfilters (3) mit einem Oxidationskatalysator (4) und mit einem Partikelfilter (5), der in die Auspuffanlage (1) eines Dieselmotors (2) eines Kraftfahrzeugs montiert ist, wobei das System eine elektronische Steuereinheit (11), eine gesteuerte Kraftstoffeinspritzdüse (6), die vor dem katalytischen Partikelfilter (3) angeordnet ist und von einer gesteuerten Pumpe (9) mit Kraftstoff versorgt wird, Einrichtungen (13) zur Bestimmung der Temperatur (Tₐₘₒₙₜ) der Abgase des Motors (2) vor dem Oxidationskatalysator (4) und Einrichtungen (14) zur Bestimmung der Temperatur (Tₐᵥₐₗ) der Abgase des Motors (2) hinter dem Oxidationskatalysator (4) enthält, **dadurch gekennzeichnet, dass** es Erfassungseinrichtungen (17) einer Blockierung der Einspritzdüse (6) in offener Stellung ausgehend von den Temperaturen (Tₐₘₒₙₜ, Tₐᵥₐₗ) vor und hinter dem Oxidationskatalysator (4) enthält,
wobei die Erfassungseinrichtungen (17) Schätzeinrichtungen (18) der von der Einspritzdüse (6) eingespritzten Kraftstoffmenge ausgehend von den Temperaturen (Tₐₘₒₙₜ, Tₐᵥₐₗ) vor und hinter dem Oxidationskatalysator (4) und Vergleichseinrichtungen (19) zum Vergleich der geschätzten eingespritztem Kraftstoffmenge mit einer Schwellenmenge enthalten,
wobei die Erfassungseinrichtungen (17) außerdem geeignet sind, um eine Blockierung der Einspritzdüse (6) in der offenen Stellung zu erfassen, wenn die geschätzte eingespritzte Kraftstoffmenge höher als die Schwellenmenge ist.

2. System nach Anspruch 1, bei dem die Schätzeinrichtungen (18) geeignet sind, um die Schätzung der von der Einspritzdüse (6) eingespritzten Kraftstoffmenge durch Modellierungsumkehr einer Schätzung der Differenz zwischen den Temperaturen (Tₐₘₒₙₜ, Tₐᵥₐₗ) vor und hinter dem Oxidationskatalysator (4) ausgehend von der von der Düse (6) eingespritzten Kraftstoffmenge durchzuführen.

3. System nach einem der vorhergehenden Ansprüche, das außerdem Deaktivierungseinrichtungen (20) enthält, um die Erfassungseinrichtungen (17) zu deaktivieren, wenn eine elektrische Betriebsstörung mindestens einer der Bestimmungseinrichtungen (13, 14) der Temperaturen (Tₐₘₒₙₜ, Tₐᵥₐₗ) der Abgase des Motors (2) vor und hinter dem Oxidationskatalysator (4) erfasst wird, wenn eine elektrische Betriebsstörung der Einspritzdüse (6) erfasst wird, wenn eine elektrische Betriebsstörung der die Einspritzdüse (6) mit Kraftstoff speisenden Pumpe (9) erfasst wird, oder wenn die Pumpe (9) deaktiviert ist.

4. System nach einem der vorhergehenden Ansprüche, bei dem die Erfassungseinrichtungen (15) geeignet sind, um die Regeneration des katalytischen Partikelfilters (3) zu beenden, wenn die Erfassungseinrichtungen (15) eine Blockierung der Einspritzdüse (6) in offener Stellung erfassen.

5. Verfahren zur Regeneration eines katalytischen Partikelfilters (3) mit einem Oxidationskatalysator (4) und mit einem Partikelfilter (5), der in die Auspuffanlage (1) eines Dieselmotors (2) eines Kraftfahrzeugs montiert ist, **dadurch gekennzeichnet, dass** eine Blockierung einer vor dem katalytischen Partikelfilter (3) angeordneten gesteuerten Einspritzdüse (6) in offener Stellung ausgehend von den Temperaturen (Tₐₘₒₙₜ, Tₐᵥₐₗ) vor und hinter dem Oxidationskatalysator (4) erfasst wird, und bei dem eine eingespritzte Kraftstoffmenge ausgehend von den Temperaturen (Tₐₘₒₙₜ, Tₐᵥₐₗ) vor und hinter dem Oxidationskatalysator (4) geschätzt wird,
eine Blockierung der Einspritzdüse (6) in offener Stellung erfasst wird, wenn eine geschätzte eingespritzte Kraftstoffmenge höher als eine Schwellenmenge ist.

6. Verfahren nach Anspruch 5, bei dem die Regeneration des katalytischen Partikelfilters (3) beendet wird, wenn eine Blockierung der Einspritzdüse (6) in offener Stellung erfasst wird.
